# EUROPÄISCHE PATENTSCHRIFT

(11) **EP 1 914 382 B1**
(45) Veröffentlichungstag und Bekanntmachung des Hinweises auf die Patenterteilung: **10.02.2010**
(21) Anmeldenummer: 06022061.3
(22) Anmeldetag: 20.10.2006
(51) Int. Cl.: F01D 5/00, B23P 6/00, B23P 6/04

(54) **Verfahren zur Reparatur einer Turbinenschaufel**
Method for repairing a turbine blade
Procédé de réparation d'une aube de turbine

(43) Veröffentlichungstag der Anmeldung: 23.04.2008
(73) Patentinhaber: SIEMENS AKTIENGESELLSCHAFT, 80333 München (DE)
(72) Erfinder: Ahmad, Fathi, 41564 Kaarst (DE); Dankert, Michael, Dr., 63069 Offenbach (DE)

(56) Entgegenhaltungen:
- EP-A- 1 371 439
- EP-A- 1 607 169
- EP-A- 1 674 658
- US-A1- 2003 082 048

## Beschreibung

Die Erfindung bezieht sich auf ein Verfahren zur Reparatur eines Endbereichs des Schaufelblatts einer Turbinenschaufel, bei dem ein Endersatzstück an den Endbereich angefügt wird.

Turbinen, insbesondere Gasturbinen, werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise zu Schaufelgruppen oder Schaufelreihen zusammengefassten Laufschaufeln angeordnet, die über einen Impulsübertrag aus dem Arbeitsmedium die Turbinenwelle antreiben. Zur Führung des Arbeitsmediums in der Turbineneinheit sind zudem üblicherweise zwischen benachbarten Laufschaufelreihen mit dem Turbinengehäuse verbundene Leitschaufelreihen angeordnet.

Die Turbinenschaufeln, also Laufschaufeln und auch Leitschaufeln, sind üblicherweise erheblichen thermischen Belastungen ausgesetzt, wobei insbesondere die in einer Einbauposition vergleichsweise nahe zur Brennkammer angeordneten Turbinenschaufeln einer besonders hohen thermischen Belastung ausgesetzt sind. Durch die infolge dieser thermischen Belastung anfallenden thermischen Verspannungen kann es zu Rissbildungen im Schaufelkörper, insbesondere im besonders belasteten Spitzen- oder Endbereich der jeweiligen Turbinenschaufel, kommen. Derartig gebildete Risse breiten sich üblicherweise im Rahmen der Rissbildungsdynamik weiter in den Schaufelkörper hinein aus und können dabei ein für einen weiteren Betrieb der betroffenen Turbinenschaufel unzulässiges Maß überschreiten. In diesem Fall ist eine Reparaturmaßnahme für die betroffene Turbinenschaufel erforderlich.

Im Rahmen üblicher Reparaturverfahren wird dabei der betroffene Turbinenschaufelbereich, üblicherweise der Spitzenbereich oder Endbereich des Schaufelblatts der Turbinenschaufel, mit einem Endersatzstück versehen. Dieses wird üblicherweise an den von der Rissbildung betroffenen Endbereich angefügt, wobei in der Regel zum Anfügen ein Schweißverfahren vorgesehen ist. Eine derartig reparierte Turbinenschaufel weist aber systembedingt eine lediglich begrenzte Lebensdauer auf, so dass im Vergleich zu den neuen Turbinenschaufeln nach vergleichsweise kurzen Betriebs- oder Wartungsintervallen eine erneute Überarbeitungsmaßnahme an der betroffenen Turbinenschaufel erforderlich werden kann. US 2003/0082048 offenbart ein Reparaturverfahren von Turbinenblättern einer Gasturbine nach dem Oberbegriff vom Anspruch 1.

Der Erfindung liegt daher die Aufgabe zugrunde, ein Verfahren zur Reparatur des Endbereichs des Schaufelblatts einer Turbinenschaufel der oben genannten Art anzugeben, mit dem auch nach der Reparatur der Turbinenschaufel eine besonders lange Lebensdauer oder weitere Betriebszeit der Turbinenschaufel erreichbar ist.

Diese Aufgabe wird erfindungsgemäß mit den Merkmalen des Anspruchs 1 gelöst.

Die Erfindung geht dabei von der Überlegung aus, dass zur Gewährleistung einer besonders langen Lebensdauer der reparierten Turbinenschaufel die die Lebensdauer begrenzende Rissbildungsdynamik im Schaufelkörper oder Schaufelblatt in besonderem Maße unterbunden werden sollte. Dabei sollte berücksichtigt werden, dass die bereits aufgetretenen Risse, die ursprünglich die Reparatur der Turbinenschaufel bedingt haben, in jedem Fall als Keimzelle oder Ansatzpunkt für weitere Rissbildungseffekte dienen könnten. Daher sollte gerade bezogen auf derartige bereits vorhandene Risse eine weitere Ausbildung der Risse in den Schaufelkörper hinein gezielt unterbunden werden. Gerade bei der Anfügung des Endersatzstücks, beispielsweise über Schweißen, werden aber auftretende Risse auch in das angefügte Reparaturstück oder Ersatzstück mit eingeleitet, so dass dessen Lebensdauer gerade infolge der bereits vorhandenen Risse im eigentlichen Schaufelkörper begrenzt ist. Um eine derartige Einleitung der Risse in das Ersatzstück zu vermeiden, sollte das Ersatzstück im Bereich seines Kontakts mit dem reparaturbedürftigen Endbereich der Turbinenschaufel mit einer Formausnehmung versehen sein. Diese Formausnehmung bildet nach Anfügung des Ersatzstückes einen Hohlraum, über den hinweg sich die Risse nicht ausbreiten können. Die Einleitung der Risse in das Reparaturersatzstück ist damit vermieden.

Um die Ausbreitung der Risse in das Ersatzstück hinein besonders konsequent zu unterbinden, sollte die Formausnehmung gezielt einem bereits erkannten Riss im zu reparierenden Schaufelkörper zugeordnet und zu diesem benachbart positioniert werden. Dazu wird im Endbereich der Turbinenschaufel ein Ursprungsort einer Rissbildung ermittelt, wobei die Formausnehmung in der Kontaktfläche in einer mit dem Ursprungsort korrespondierenden Zone angebracht wird.

Vorteilhafterweise wird das Endersatzstück dabei an den Endbereich der Turbinenschaufel angeschweißt, so dass eine besonders innige Anfügung und damit eine besonders hohe thermische und mechanische Belastbarkeit der reparierten Turbinenschaufel gewährleistet ist.

Um eine besonders einfache Verarbeitbarkeit der Komponenten und damit einen besonders gering gehaltenen Reparaturaufwand zu ermöglichen, wird für das Endersatzstück vorteilhafterweise ein im Vergleich zum Schaufelmaterial unterschiedliches Material, insbesondere ein Material geringerer Härte, insbesondere IN625 und/oder IN738, gewählt.

Vorteilhafterweise ist die Formausnehmung derart dimensioniert, dass die Ausnehmungstiefe der Materialdicke der Schaufelwand entspricht.

Die mit der Erfindung erzielten Vorteile bestehen insbesondere darin, dass durch die Anbringung der Formausnehmung der Kontaktbereich des Endersatzstücks mit dem Endbereich der zu reparierenden Turbinenschaufel ein zwischen diesen gebildeter Hohlraum unmittelbar benachbart zum aufgetretenen Riss im Schaufelblatt positioniert werden kann. Durch diesen Hohlraum zum Endersatzstück hin ist sicher vermieden, dass der im Schaufelblatt vorhandene Riss als Keim für eine Rissbildung auch im Endersatzstück dienen kann. Damit ist eine Ausbreitung des Risses in das Endersatzstück hinein vermieden, so dass eine besonders lange Lebensdauer für die solchermaßen reparierte Turbinenschaufel erreichbar ist.

Ein Ausführungsbeispiel der Erfindung wird anhand einer Zeichnung näher erläutert. Darin zeigen:
- FIG 1: einen Längsschnitt durch eine Gasturbine, und
- FIG 2: ausschnittsweise den Endbereich des Schaufelblatts einer Turbinenschaufel der Gasturbine gemäß FIG 1.

Gleiche Teile sind in beiden Figuren mit denselben Bezugszeichen versehen.

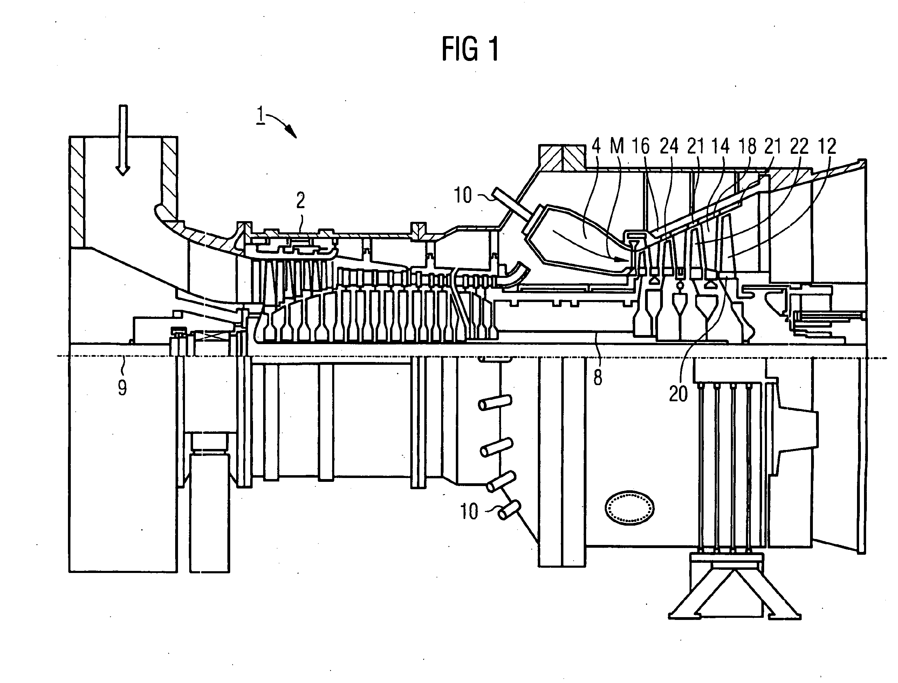

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag von einem die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 14 oder einer Leitschaufelreihe und aus einem Kranz von Leitschaufeln 12 oder einer Laufschaufelreihe wird dabei auch als Turbinenstufe bezeichnet.

Jede Leitschaufel 14 weist eine Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die innere Oberfläche jedes Führungsrings 21 ist dabei ebenfalls dem heißen, die Turbine 6 durchströmenden Arbeitsmedium M ausgesetzt und in radialer Richtung vom äußeren Ende 22 der ihm gegenüberliegenden Laufschaufeln 12 einer Laufschaufelreihe durch einen Spalt 24 beabstandet.

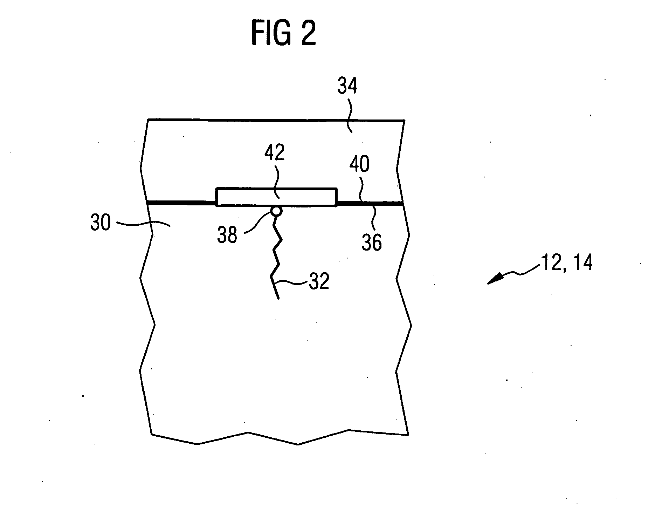

Beim Betrieb der Gasturbine 1 werden die Leitschaufeln 14 und die Laufschaufeln 12 einer erheblichen thermischen Belastung durch das die Gasturbine 1 durchströmende Arbeitsmedium M ausgesetzt. Dies gilt insbesondere für diejenigen Laufschaufeln 12 und diejenigen Leitschaufeln 14, die der ersten, den Brennern 10 unmittelbar nachfolgenden Turbinenstufe zugeordnet sind. Infolge der thermischen Belastung dieser Laufschaufeln 12 oder Leitschaufeln 14 können sich insbesondere im End- oder Spitzenbereich 20 Risse bilden, die zu einer Beeinträchtigung der betrieblichen Sicherheit und somit zur Notwendigkeit einer Reparatur oder eines Austauschs der jeweiligen Turbinenschaufel führen können. In der ausschnittsweise vergrößerten Darstellung nach FIG 2 ist ein derartiger Riss 32 für den Endbereich 30 einer Laufschaufel 12 oder einer Leitschaufel 14 gezeigt.

Zur Reparatur einer derartig beschädigten Turbinenschaufel wird ein Endersatzstück 34 durch Schweißen an den Endbereich 30 angefügt, so dass die weitere Ausdehnung des jeweiligen Risses 32 unterbunden werden soll. Um bei diesem Reparaturverfahren die Lebensdauer der solchermaßen reparierten Turbinenschaufel besonders groß zu halten, ist vorgesehen, die Reparatur derart auszuführen, dass nach der Anfügung des Endersatzstücks 34 eine Rissausbildung oder -ausbreitung in das Endersatzstück 34 verhindert oder zumindest erschwert ist.

Um dies sicherzustellen, wird zur Reparatur der Turbinenschaufel zunächst die Kontaktfläche 36 des Endbereichs 30, an der das Endersatzstück 34 angefügt werden soll, auf Rissbildung überprüft. Dabei wird zunächst im Endbereich 30 der Ursprungsort 38 ermittelt, von dem die Rissbildung ausgegangen ist, und von dem sich der Riss 32 in das Schaufelblatt der jeweiligen Turbinenschaufel hinein ausgebreitet hat. Anschließend wird im Endersatzstück 34 im Bereich seiner Kontaktfläche 40, über die es mit der Kontaktfläche 36 des Endbereichs 30 verschweißt werden soll, mit einer Formausnehmung 42 versehen. Die Formausnehmung 42, die schlitzförmig ausgebildet ist und in ihrer Tiefe der Materialdicke der Schaufel entspricht, wird dabei in der Kontaktfläche 40 in einer mit dem Ursprungsort 38 korrespondierenden Zone derart angebracht, dass nach Anfügung des Endersatzstücks 34 an den Endbereich 30 die Formausnehmung 42 den Ursprungsort 38 im Endbereich 30 überdeckt.

Somit entsteht nach Anfügen oder Verschweißen des Endersatzstücks 34 mit dem Endbereich 30 zwischen diesen Komponenten ein von der Kontaktfläche 36 des Endbereichs 30 einerseits und der Formausnehmung 42 andererseits umschlossener Hohlraum, der dem Ursprungsort 38 des ermittelten Risses 32 unmittelbar benachbart ist. Über diesen Hohlraum hinweg ist eine Rissausbreitung nicht möglich. Damit ist sichergestellt, dass eine direkte Überleitung des Risses 32 in das angefügte Endersatzstück 34 infolge gewöhnlicher Rissausbreitung nicht stattfinden kann.

Die solchermaßen reparierte Turbinenschaufel weist somit gegenüber sich anbahnender Rissbildung eine besonders hohe Lebensdauer auf. Zur weiteren Verbesserung der Anordnung kann dabei die Formausnehmung 42 hinsichtlich ihrer Konturierunq oder Dimensionierung derart ausgestaltet sein, dass erwarteten Spannungs- oder Belastungsprofilen innerhalb der reparierten Turbinenschaufel infolge thermischer Belastung oder dergleichen vorbeugend Rechnung getragen ist. Damit kann das Spannungsprofil in der reparierten Turbinenschaufel durch geeignete Platzierung derartiger Formausnehmungen 42 derart modifiziert werden, dass die Neigung zur Rissbildung auch über den bereits bestehenden Riss 32 hinaus minimiert ist.

## Patentansprüche

1. Verfahren zur Reparatur eines Endbereichs (30) des Schaufelblatts einer Turbinenschaufel,
bei dem ein Endersatzstück (34) an den Endbereich (30) angefügt wird,
wobei das Endersatzstück (34) im Bereich seiner Kontaktfläche (36) zum Endbereich (30) mit einer Formausnehmung (42) versehen wird, **dadurch gekennzeichnet dass** im Endbereich (30) ein Ursprungsort (38) einer Rissbildung ermittelt wird,
wobei die Formausnehmung (42) in der Kontaktfläche (40) in einer mit dem Ursprungsort (38) korrespondierenden Zone angebracht wird.

2. Verfahren nach Anspruch 1,
bei dem das Endersatzstück (34) an den Endbereich (30) angeschweißt wird.

3. Verfahren nach einem der Ansprüche 1 bis 2,
bei dem für das Endersatzstück (34) ein im Vergleich zum Schaufelmaterial unterschiedliches Material gewählt wird.

## Claims

1. Process for repairing an end region (30) of the main blade or vane part of a turbine blade or vane,
in which an end replacement piece (34) is attached to the end region (30),
wherein the end replacement piece (34) is provided with a shaped recess (42) in the region of its contact surface (36) with the end region (30), **characterized in that**
a site of origin (38) for the formation of a crack is determined in the end region (30),
wherein the shaped recess (42) is fitted in the contact surface (40) in a zone which corresponds to the site of origin (38).

2. Process according to Claim 1,
in which the end replacement piece (34) is welded onto the end region (30).

3. Process according to either of Claims 1 and 2,
in which the material selected for the end replacement piece (34) is different from that of the blade or vane material.

## Revendications

1. Procédé de réparation d'une partie ( 30 ) d'extrémité de la lame d'une aube de turbine,
dans lequel on adjoint une pièce ( 34 ) d'extrémité de remplacement à la partie ( 30 ) d'extrémité,
la pièce ( 34 ) d'extrémité de remplacement étant munie dans la partie de sa surface ( 36 ) de contact avec la partie ( 30 ) d'extrémité d'un évidemment ( 42 ) conformé, **caractérisé en ce qu'**il est déterminé dans la partie ( 30 ) d'extrémité un emplacement ( 38 ) d'origine d'une formation de fissures,
l'évidemment ( 42 ) conformé dans la surface ( 40 ) de contact étant mis dans une zone correspondant à l'emplacement ( 38 ) d'origine.

2. Procédé suivant la revendication 1,
dans lequel on soude la pièce ( 34 ) d'extrémité de remplacement à la partie ( 30 ) d'extrémité.

3. Procédé suivant l'une des revendications 1 à 2,
dans lequel on choisit pour la pièce ( 34 ) d'extrémité de remplacement un matériau différent par rapport au matériau de l'aube.
